# EUROPEAN PATENT SPECIFICATION

(11) **EP 4 574 314 B1**
(45) Date of publication and mention of the grant of the patent: **09.09.2026**
(21) Application number: 24221273.6
(22) Date of filing: 18.12.2024
(51) Int. Cl.: B23B 13/08

(54) **ANTI-VIBRATION DEVICE AND MACHINE TOOL COMPRISING SUCH AN ANTI-VIBRATION DEVICE**
SCHWINGUNGSDÄMPFUNGSVORRICHTUNG UND WERKZEUGMASCHINE MIT EINER DERARTIGEN SCHWINGUNGSDÄMPFUNGSVORRICHTUNG
DISPOSITIF ANTI-VIBRATIONS ET MACHINE-OUTIL COMPRENANT UN TEL DISPOSITIF ANTI-VIBRATIONS

(30) Priority: 21.12.2023 IT 202300027711
(43) Date of publication of application: 25.06.2025
(73) Proprietor: Unilock S.r.l., 20090 Trezzano sul Naviglio (MI) (IT)
(72) Inventor: Grassi, Valerio, 20090 Trezzano sul Naviglio (MI) (IT); Crosti, Chiara, 20090 Trezzano sul Naviglio (MI) (IT); Tanzi, Andrea, 20090 Trezzano sul Naviglio (MI) (IT); Crosti, Umberto, 20090 Trezzano sul Naviglio (MI) (IT)
(74) Representative: Perani & Partners S.p.A.

(56) References cited:
- WO-A1-2023/067375
- US-A1- 2007 241 571
- US-A1- 2015 360 294
- US-B2- 9 975 508

## Description

### Technical Field

The present invention relates to an anti-vibration device which finds useful application in the field of equipment for machine tools, according to the preamble of Claim 1.

In detail, the anti-vibration device which is the subject of the present invention can be installed in machine tools for mechanical machining - for example lathes (in particular, single-spindle and multi-spindle lathes), milling machines, and machining centres - to dampen vibrations and oscillations of a workpiece during machining.

A further object of the present invention is a machine tool configured to perform mechanical machining on a workpiece - for example, a turning machining of a bar - employing such anti-vibration device.

### State of the art

In the field of mechanical machining for chip removal, the need has always been felt to reduce the vibrations and oscillations which are induced on the workpiece, so as to improve the precision and quality of processing as well as reduce the noise of the machine.

To this end, over the years, several anti-vibration devices have been developed to dampen the vibrations and oscillations of the workpiece during machining.

For example, damping inserts are known in the state of the art, which are available between the working surface and the machine tool and are adapted to dampen the vibrations of the entire machine, and therefore also of the workpiece, during machining.

Disadvantageously, such damping inserts act indirectly on the workpiece; therefore, although they are able to reduce the vibrations transmitted to the working surface and benefit acoustic comfort, they are unsuitable for obtaining high damping of the vibration and oscillations of the workpiece necessary to meet more stringent machining tolerances.

To overcome the limits of the known damping inserts, anti-vibration tubes have been developed which are adapted to be interposed between the machine and the portion of the workpiece which is inserted into the machine tool during machining (i.e., section of the workpiece upstream of the spindle).

In detail, such anti-vibration tubes have an outer surface with a circular geometry configured to abut against a feed duct of the machine through which the workpiece (e.g., bar) is fed to the spindle, and an inner channel adapted to receive and slide the workpiece therein.

Disadvantageously, especially for high dimensional differences between the machine feed channel and the workpiece, the known anti-vibration tubes require high thicknesses which increase the rigidity thereof at the expense of the damping properties.

Furthermore, disadvantageously, the high thicknesses are reflected in a high consumption of raw materials to the detriment of the environment.

To increase the flexibility and therefore the damping properties of the anti-vibration tubes, it was thought to create annular bulges ("bosses") on the outer surface of the damping tubes so as to be able to locally reduce the thickness of the tube.

However, although this solution is able to locally increase the flexibility of the anti-vibration tube, it significantly complicates the production process by creating undercuts along the prevalent direction of extension of the tube.

The annular bulges can be obtained by subtraction of material, for example, by means of a turning process. However, it is clear that this, in addition to complicating the production process by introducing a new processing step, is not able to reduce the use of raw materials and therefore the environmental impact. In fact, the material removed by turning is transformed into non-reusable production waste.

US2007241571A1 discloses a finned "liner" for machine tools (e.g., lathes) which is made of thermoplastic materials such as polypropylene, PVC or nylon. It should be noted that the protrusions which form the fins make the "liner" which is the subject of US2007241571A1 difficult to produce.

In paragraph [0032], US2007241571A1 teaches that the fins, if made with reduced thicknesses, can act as shock absorbers. The reduced thicknesses necessary for the fins to be able to deform and further dissipate vibrations in the production of the liner which is the subject of US2007241571A1, making the fins easily subject to breakage or production defects.

It is therefore evident that the liner which is the subject of US2007241571A1 is not easy to produce, especially if it is to be made capable of absorbing vibrations by making fins with reduced thicknesses.

### Object of the invention

In this context, the technical task underlying the present invention is to propose an anti-vibration device and a related machine tool which employs such anti-vibration device which overcomes the drawbacks of the prior art mentioned above.

In particular, one object of the present invention is to provide an anti-vibration device capable of obtaining high damping properties and at the same time safeguarding the environment.

It is also an object of the present invention to provide an anti-vibration device that is simple and quick to produce.

A further object of the present invention is to provide a machine tool which is at the same time silent and capable of satisfying more stringent tolerances and high production qualities.

### SUMMARY OF THE INVENTION

In accordance with the present invention, the technical task indicated and the specified objects are achieved by an anti-vibration device and a related machine tool employing such anti-vibration device in accordance with one or more of the claims below.

In particular, the present invention proposes to shape the outer surface of the anti-vibration device so that it has a polygonal cross-section which can be inscribed in the feed channel of the machine tool inside which, in use, it is housed.

Therefore, the anti-vibration device has a wall delimited externally by the outer surface and internally by a channel adapted to receive and slide the workpiece therein.

It should be noted that the polygonal conformation of the outer surface allows the wall thickness to be locally thinned at the sides of the polygon and then increased at the vertices so that they can abut against the feed channel of the machine tool.

Advantageously, having thinner wall portions makes it possible to reduce the use of raw materials, which is beneficial for the environment, as well as to reduce the production costs and, at the same time, to increase the flexibility of the anti-vibration device, improving the damping properties thereof.

It should further be noted that the outer surface of polygonal conformation is easy and quick to produce - for example, by means of a moulding process - since it does not have undercuts.

According to one aspect, the wall is made of elastomeric material which, in addition to being a durable material, is able to absorb a high energy with relatively small deformations, thus ensuring high damping properties. Therefore, unlike US2007241571A1 in which the liner is made of thermoplastic materials with poor dissipative properties and, in fact, the dissipation effect is only obtainable by thinning the fins - i.e., through geometric factors which complicate the production process (see paragraph [0032]) -, in the present invention high dissipations are obtained by means of the section of a particular family of materials, i.e., that of elastomers. This makes it possible to eliminate the need to use the fragile and complicated thin fins of the liner of US2007241571A1, thus making it simpler to produce.

From the above it is clear that the integration of the anti-vibration device disclosed above in a machine tool makes it possible to significantly reduce the vibrations and oscillations of the workpiece, benefiting machining quality and precision as well as acoustic comfort.

### LIST OF FIGURES

Further characteristics and advantages of the present invention will become more apparent from the description of an exemplary, but not exclusive, and therefore non-limiting preferred embodiment of an anti-vibration device and of a related machine tool employing such anti-vibration device, as illustrated in the appended figures, in which:
- Figure 1a shows a front view of a first embodiment of an anti-vibration device according to the present invention,
- Figure 1b shows the anti-vibration device of Figure 1a sectioned along the section plane P1-P1,
- Figure 2a shows a front view of a second embodiment of an anti-vibration device according to the present invention,
- Figure 2b shows the anti-vibration device of Figure 2a sectioned along the section plane P2-P2,
- Figure 3a shows a front view of a third embodiment of an anti-vibration device according to the present invention,
- Figure 3b shows the anti-vibration device of Figure 3a sectioned along the section plane P3-P3,

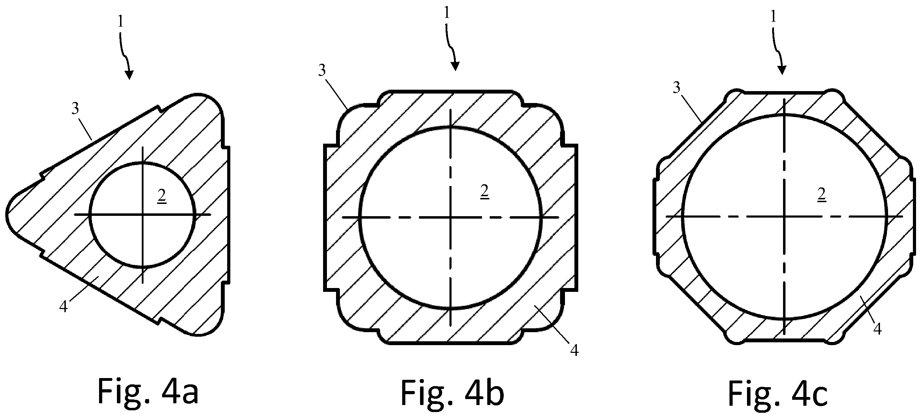

- Figure 4a shows the anti-vibration device of Figure 1b sectioned along the section plane B1-B1,
- Figure 4b shows the anti-vibration device of Figure 2b sectioned along the section plane B2-B2,
- Figure 4c shows the anti-vibration device of Figure 3b sectioned along the section plane B3-B3,
- Figure 5 shows a perspective view of the anti-vibration device of Figure 3a and 3b,
- Figure 6 shows a perspective view of a machine tool according to the present invention,
- Figure 7a shows a lateral partially sectional view of the machine tool of Figure 6;
- Figure 7b shows the section of the machine tool of Figure 7a along the plane A-A
- Figure 7c shows the section of the machine tool of Figure 7a along the plane B-B;
- Figure 8 shows a perspective view of a component of the machine tool according to the present invention,
- Figure 8b shows an enlargement of detail A of Figure 7a;
- Figure 8c shows an enlargement of detail B of Figure 7a;
- Figure 9 shows the component of Figure 8a partially in section to show some internal construction details thereof.

### DETAILED DESCRIPTION

The present disclosure relates to an anti-vibration device 1 configured to generate a dissipation adapted to dampen vibrations and oscillations induced in a workpiece P during a mechanical machining process.

The anti-vibration device 1 is configured to be installed in a machine tool 100 adapted to perform mechanical machining on the workpiece P, for example, a machine for mechanical machining for chip removal, in particular a single-spindle or multi-spindle lathe.

The anti-vibration device 1 is further configured to be installed in a loader 200 configured to load the workpiece P into the machine tool 100.

More details about the machine tool 100, the loader 200 and the arrangement of the anti-vibration device 1 therein will be provided in a following part of the disclosure.

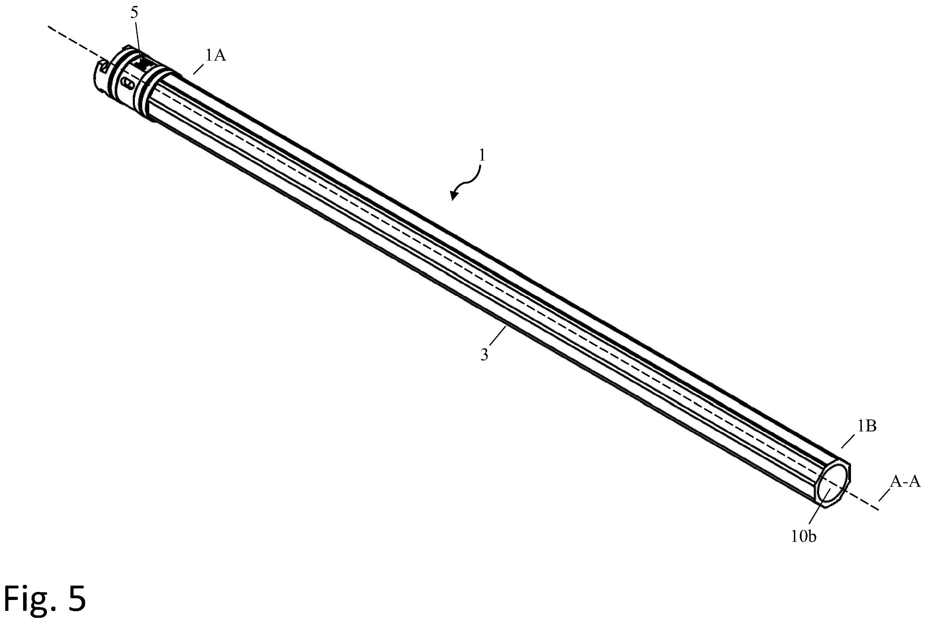

With reference to Figure 5, the anti-vibration device 1 has an elongated conformation extending along a prevalent direction of extension A-A between a pair of ends 1A, 1B.

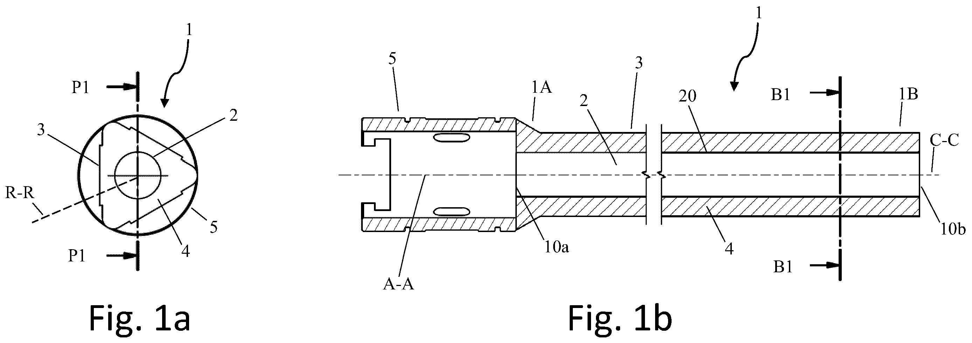

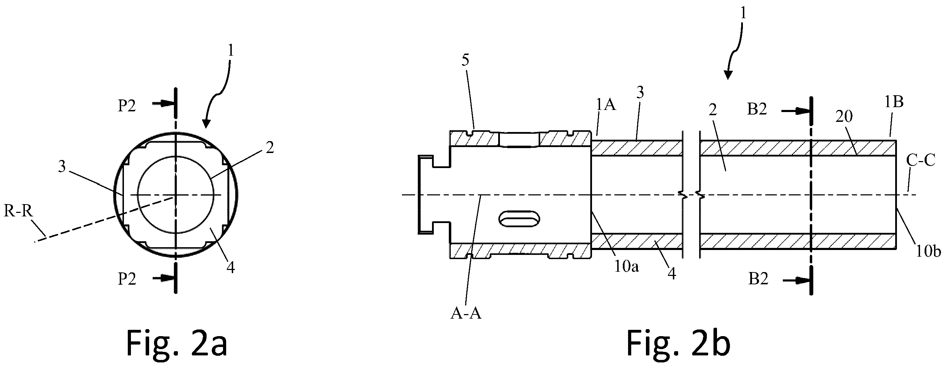

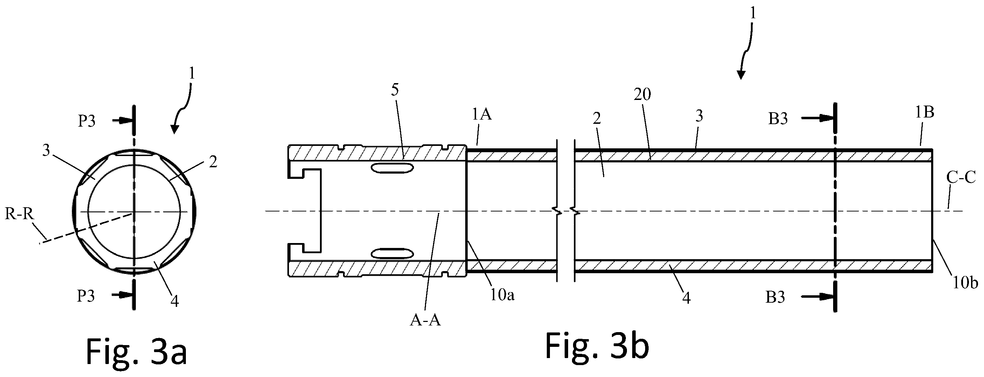

With reference to the sectional views shown in Figures 1b, 2b and 3b, the anti-vibration device 1 comprises an inner channel 2 extending along the prevalent direction of extension A-A between the pair of ends 1A, 1B.

Such channel 2 is configured to receive the workpiece P and slide therein along the prevalent direction of extension A-A from one end to the other 1A, 1B.

It should be specified that the channel 2 extends along the prevalent direction of extension A-A from one end 1A of the anti-vibration device 1 to the opposite one 1B, making respective openings 10a, 10b on the ends 1A, 1B which are adapted to allow the insertion/extraction of the workpiece in the channel 2. In use, when the workpiece P is fed to a spindle 101 of the machine tool 100, the workpiece P slides inside the channel 2 along the prevalent direction of extension A-A entering from one of the ends 1A and exiting from the opposite end 1B through the respective openings 10a, 10b.

It should be noted that, when the workpiece P is at least partially housed in the channel 2, it is in direct contact with the anti-vibration device 1, in particular with an inner surface 20 defining the channel 2. Therefore, if during mechanical machining the workpiece P starts to vibrate/oscillate, the anti-vibration device 1 is able to act directly on the workpiece P to dampen the vibrations and oscillatory motion thereof.

According to an aspect, the channel 2 has an axis C-C, coinciding with the prevalent direction of extension A-A, and is configured to arrange the workpiece P along its axis C-C.

Preferably, the workpiece P has a rod-like conformation and the channel 2 is configured to arrange the workpiece P aligned along the prevalent direction of extension A-A. The workpiece P is, for example, a bar or a tube of length comprised between 0.5m and 6m.

In the embodiment shown in Figures 1a, 2a and 3a, the channel 2 has a cylindrical conformation characterized by a circular cross-section.

In the context of the present invention, "cross-section" means the section oriented perpendicularly to the prevalent direction of extension A-A of the anti-vibration device 1.

According to the definition of "cross-section" above, it is evident that the cross-section of the channel 2 defines the passage opening of the workpiece P.

It should be specified that the person skilled in the art is able to appropriately size the cross-section of the channel 2 according to the geometric characteristics of the workpiece P.

It is however worth specifying that, in order to facilitate the movement of the workpiece P in the channel 2, it is preferable that the workpiece P has a clearance of 1mm when inserted in the channel 2. In other words, the cross-section of the channel 2 is oversized with respect to the cross-section of the workpiece P, preferably by 1 mm.

The anti-vibration device 1 further comprises an outer surface 3, opposite to the inner channel 2, extending along the prevalent direction of extension A-A between the pair of ends 1A, 1B.

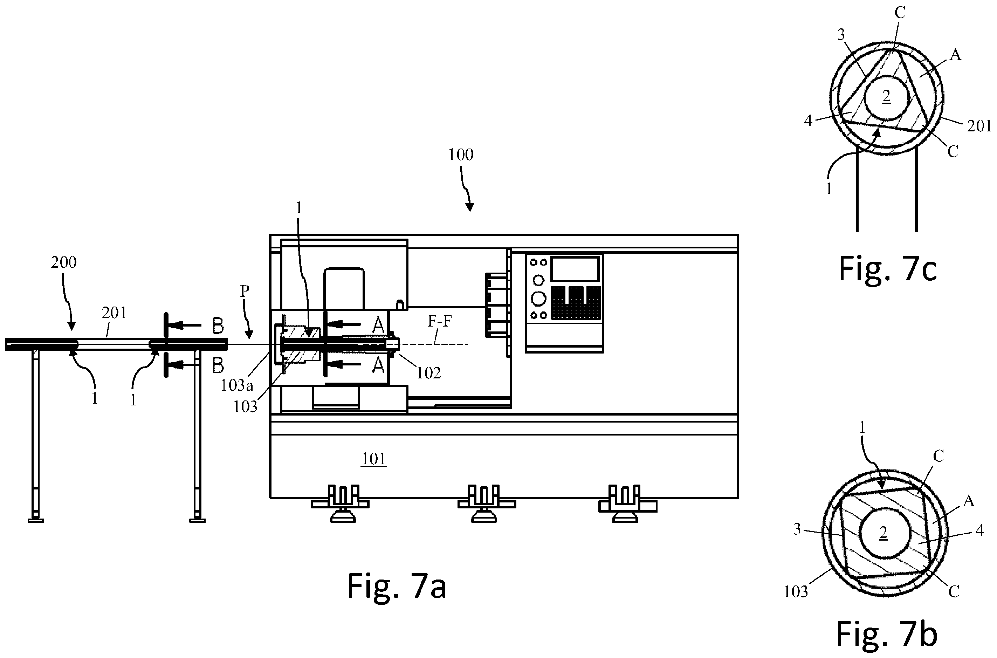

With reference to Figure 7b, the outer surface 3 is configured to come into contact with a special feed channel 103 of the machine tool 100 or with a special loading channel 201 of the loader 200, when the anti-vibration device 1 is housed in the machine tool 100 or in the loader 200. More details regarding the feed channel 103 and the loading channel 201 are given in a following part of the disclosure.

With reference to Figures 1a, 2a, and 3a, the outer surface 3 has a polygonal cross-section, for example, triangular, square, rectangular, hexagonal, octagonal, and the like. It follows that the outer surface 3 has a prismatic conformation with a polygonal base.

Preferably, the cross-section of the outer surface 3 defines a regular polygon.

Even more preferably, the outer surface 3 lacks fins or any other protruding geometry adapted to come into contact with the feed channel 103 of the machine tool 100 or with a loading channel 201 of the loader 200. In other words, preferably, the anti-vibration device 1 is not finned.

Furthermore, preferably, the polygonal cross-section of the outer surface 3 has rounded vertices which, in the three dimensions, translate into rounded edges. The connected conformation, in addition to improving the interaction between the anti-vibration device 1 and the feed channel 103 of the machine tool 100 or with the loading channel 201 of the loader 200, facilitates the production process by moulding, avoiding geometries with sharp edges which are difficult to achieve with high precision and quality.

It should be specified that from the above it emerges that, preferably, the rounded edges are configured to come into direct contact with a feed channel 103 of the machine tool 100 or with a loading channel 201 of the loader 200.

With reference to the embodiment of Figure 5, the outer surface 3 has a constant geometric conformation along the prevalent direction of extension A-A, i.e., it does not have cross-sectional variations in the prevalent direction of extension A-A. It follows that, in the three dimensions, the outer surface 3 defines a right prism with a polygonal base (geometric conformation without undercuts in the prevalent direction of extension A-A). Advantageously, this facilitates the production process by moulding, reducing both production waste (defective parts) and die costs.

According to an aspect, the outer surface 3 extends parallel to the inner channel 2 and is opposite to the latter along a thickness direction R-R oriented orthogonally to the prevalent direction of extension A-A.

Preferably, the thickness direction R-R is oriented radially to the axis C-C of the channel 2.

According to a further aspect, the outer surface 3 extends around the axis C-C of the channel 2.

The anti-vibration device 1 has a wall 4 delimited internally by the channel 2 and externally by the outer surface 3.

Preferably, the wall 4 is made by a moulding process.

The wall 4 therefore extends along the prevalent direction of extension A-A between the pair of ends 1A, 1B of the anti-vibration device 1, and transversely to the prevalent direction of extension A-A - in particular, along the thickness direction R-R - between the channel 2 and the outer surface 3.

Preferably, the wall 4 extends continuously circumferentially around the axis C-C of the channel 2.

It should be noted that the polygonal conformation of the outer surface 3 allows the wall thickness to be locally thinned at the sides of the polygon and then increased at the vertices.

Advantageously, the thinner portions of the wall make it possible to reduce the use of raw materials in favour of the environment and, at the same time, to increase the flexibility of the anti-vibration device 1, improving the damping properties thereof.

Preferably, the wall 4 has a thickness comprised between 2 mm and 16 mm. Namely, the distance between the outer surface 3 and the channel 2 (i.e., inner surface 20) along the thickness direction R-R is not less than 2 mm and, at the same time, not more than 16 mm. Therefore, the wall 4 can assume the following thickness values 2, 3, 4, 5, 6, 7, 8, 9, 10, 11, 12, 13, 14, 15, or 16 mm or any other technically plausible value within the range 2-16.

It should be specified that thicknesses less than 2 mm are difficult to achieve and, therefore, would lead to excessive production waste to the detriment of the environment.

Otherwise, thicknesses greater than 16 mm would excessively increase the stiffness of the anti-vibration device 1 to the detriment of the damping properties and, moreover, would not make it possible to obtain an effective saving of raw materials.

It should be specified that the number of sides of the polygonal section of the outer surface 3 is chosen so as to maintain the thickness of the wall 4 within the aforementioned range of 2-16 mm.

If several geometrical conformations are available which make it possible to maintain the thickness of the wall 4 within the range 2-16 mm, it is preferable to select the one which minimizes the volume of the wall 4 so as to reduce the environmental impact and production costs.

The characteristic dimension of the outer surface 3 (i.e., diameter of the circle inscribing the polygonal cross-section) is imposed by the dimension of the feed channel 103 of the machine tool 100 or of the loading channel 201 of the loader 200 within which the anti-vibration device 1 is configured to be housed. Preferably, the characteristic dimension of the outer surface is undersized by 0.5 mm with respect to the dimension of the feed channel 103/loading channel 201.

The characteristic dimension of the channel 2 (e.g., diameter of the inner surface 20) is also imposed by the dimension of the cross-section of the workpiece P which must slide therein. Preferably, the characteristic dimension of the channel 2 is oversized by 1 mm with respect to the cross-sectional dimension of the workpiece P.

It should be noted that as the difference between the characteristic dimension of the outer surface 3 and the channel 2 increases, the number of sides of the polygonal section of the outer surface 3 must decrease to maintain the thickness of the wall 4 within the aforementioned range of 2-16 mm.

Therefore, given the diameter of the feed channel 103 or the loading channel 201 within which the anti-vibration device 1 is configured to be housed, and given the geometric characteristics of the workpiece P, the person skilled in the art - by means of geometric calculations which fall within his/her abilities - is able to determine the number of sides which the regular polygon can have so that the thickness of the wall 4 falls within the range 2-16mm.

As regards the material for making the anti-vibration device 1, it is particularly advantageous and, therefore preferable, to use polymeric materials, in particular elastomeric, for making the wall 4. In addition to being easily mouldable and durable, elastomeric materials are able to absorb high energy with relatively small deformations.

The elastomeric materials which can be used to make the wall 4 include, for example, rubber (natural or synthetic) or polyurethane.

It should be noted that natural rubber is advantageous over synthetic rubber because it requires simpler and less expensive equipment for its production.

In the embodiment of Figure 5, the anti-vibration device 1 comprises one or more junction elements 5, each arranged at a respective end 1A,1B.

Such junction elements 5 are configured to connect in series two or more anti-vibration devices 1 with the respective prevalent direction of extensions A-A aligned, or to allow the anchoring/abutment of the anti-vibration device 1 to the machine tool 100 or to the loader 200.

Preferably, the one or more junction elements 5 are mounted and fixed on the wall 4 on a respective end portion.

According to an aspect, the wall 4 is directly vulcanized on the junction elements 5.

It should be specified that the junction elements 5 leave the respective openings 10a, 10b obtained on the ends free, so as not to obstruct the introduction/extraction of the workpiece in/from the channel 2.

By allowing two or more anti-vibration devices 1 to be connected in series, the junction elements 5 facilitate the use of the latter with workpieces P of rod-like conformation which, in accordance with the above, can reach up to 6m in length.

A machine tool 100 is further the subject of the present disclosure, in particular a machine tool for chip removal, for example a single-spindle or multi-spindle lathe.

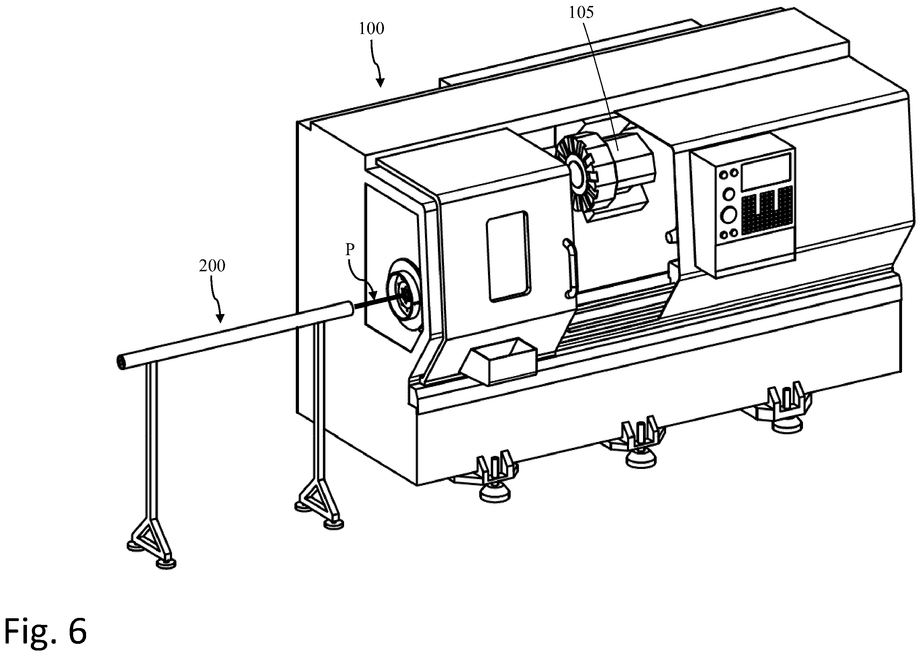

With reference to Figures 6 and 7a, such machine tool 100 comprises a main body 101 (frame), at least one spindle 102 mounted on the main body 101 and configured to clamp the workpiece P so that, during mechanical machining, special tools 105 can act on the workpiece P, varying the geometry thereof.

The machine tool 100 further comprises a feed channel 103 extending through the main body 101 and placed in communication with the spindle 102.

In use, the workpiece P passes through the feed channel 103 along a feed direction F-F from an inlet port 103a up to the spindle 102 to which it is gradually fed.

According to an aspect, the feed channel 103 has a cylindrical conformation having the feed direction F-F for axis.

Preferably, the spindle 102 is a collet chuck comprising a plurality of clamping elements (not shown in the figures) arranged around a clamping cavity (not shown in the figures) adapted to receive the workpiece P from the feed channel 103.

Even more preferably, the spindle 102 is rotatably mounted on the main body 101 of the machine tool 100 around the feed direction F-F, so that the clamping cavity is coaxial with the feed channel 103.

During the machining process the workpiece P projects partly cantilevered from the spindle 102 and is partly housed in the feed channel 103 waiting to be machined for the next movement of the workpiece along the feed direction F-F.

With reference to Figures 7a and 7b, the machine tool 100 comprises at least one anti-vibration device 1 in accordance with the above, housed in the feed channel 103 of the machine 100.

It should be noted that, when the workpiece P is at least partially arranged in the feed channel 103, the anti-vibration device 1 is interposed between the feed channel 103 and the workpiece P. Therefore, if during the mechanical machining process, the workpiece P begins to vibrate due to the centrifugal force acting thereon as it rotates, the anti-vibration device 1 (deforming and dissipating energy) will dampen the vibrational and oscillatory motion thereof.

Preferably, the anti-vibration device 1 is housed in the feed channel 103 so as to have the prevalent direction of extension A-A aligned with the feed direction F-F (i.e., the prevalent direction of extension A-A is oriented along the feed direction F-F).

In particular, according to an aspect, the anti-vibration device 1 is housed in the feed channel 103 with the channel 2 coaxial to the feed channel 103 so that the axis C-C of the channel 2 coincides with the feed direction F-F.

With reference to the embodiments shown in Figures 7b and 7c, the outer surface 3 of the anti-vibration device 1 is partially in contact with the feed channel 103 at three or more distinct contact portions C. The outer surface 3 is therefore not entirely (totally) in contact with the feed channel 103, when the anti-vibration device 1 is housed therein.

It should be specified that the number of distinct contact portions C is closely linked to the specific polygonal conformation of the outer surface. For example, if the outer surface has a triangular cross-section, there are three contact portions C (Figure 7c); otherwise if the cross-section is square or rectangular, there are four contact portions C (Figure 7b).

It should be specified that in theory, there are at least three contact portions C. In fact, on the practical side, due to tolerances or other factors there may be fewer points of contact.

Preferably, each contact portion C extends linearly along the feed direction F-F.

With reference to Figures 7b and 7c, the outer wall 3 of the anti-vibration device 1 defines air chambers A with the feed channel 103, which extend along the feed direction F-F and are (laterally) delimited by the contact portions C along a direction transverse to the feed direction F-F. The contact portions C are therefore circumferentially spaced around the feed direction F-F by the air chambers A.

In the embodiment of Figure 6a, the machine tool further comprises a loader configured to load the workpiece P into the feed channel 103.

In detail, such loader 200 has a loading channel 201 extending along a loading direction M-M which, during the loading operation of the workpiece in the channel 103, is coincident with the feed direction F-F.

Preferably, the machine tool 100 comprises a further anti-vibration device 1 housed in the loading channel 201 of the loader 200 so as to be interposed between the loading channel 201 and the workpiece P during the loading of the latter into the machine tool 100.

What was stated above for the feed channel 103 and for the housing of the anti-vibration device 1 therein similarly applies to the loading channel 201 and to the housing of the further anti-vibration device 1 therein.

It should be noted that, in use, if the workpiece P has a rod-like conformation of significant length, the workpiece P can be simultaneously arranged in both the feed channel 103 and the loading channel 201 (aligned with the latter). Therefore, if the workpiece P starts to vibrate due to the centrifugal force acting thereon as it is rotated, all the anti-vibration devices 1 will work synergistically to dissipate energy and dampen the vibratory/oscillatory motion thereof.

Figure 6 is related to a single-spindle machine tool. However, it should be specified that the present invention is also valid for multi-spindle machine tools (not shown in the figures).

If the machine tool 100 is of the multi-spindle type - i.e., if the machine tool 100 comprises a plurality of spindles 102 (and relative feed channels 103) arranged on a rotating drum configured to bring them in succession to a plurality of machining stations - the loader 200 comprises a plurality of loading channels 201 each associated with a respective spindle 102.

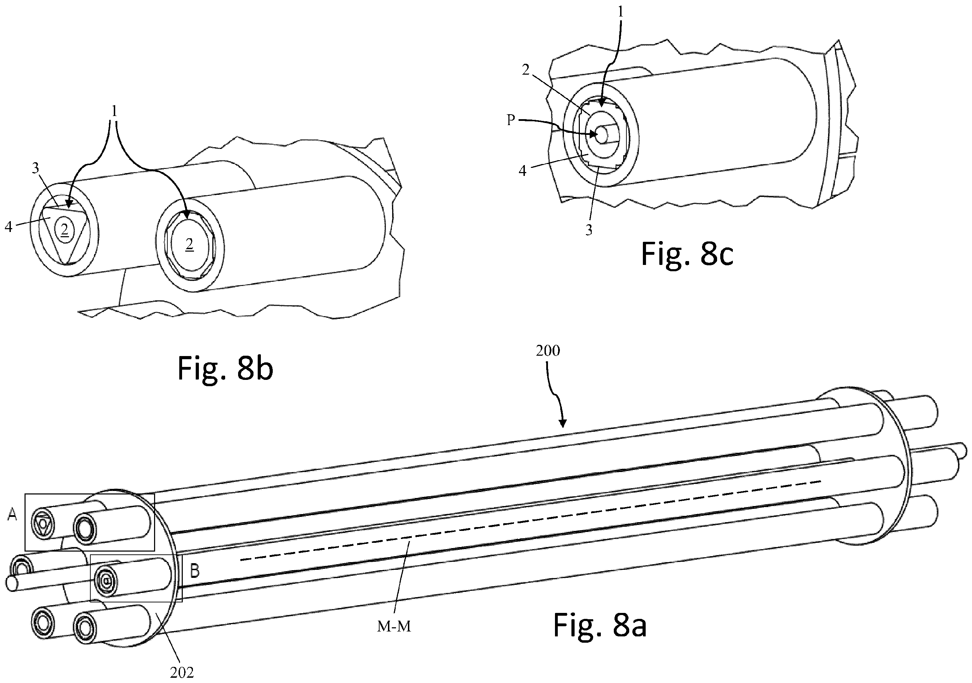

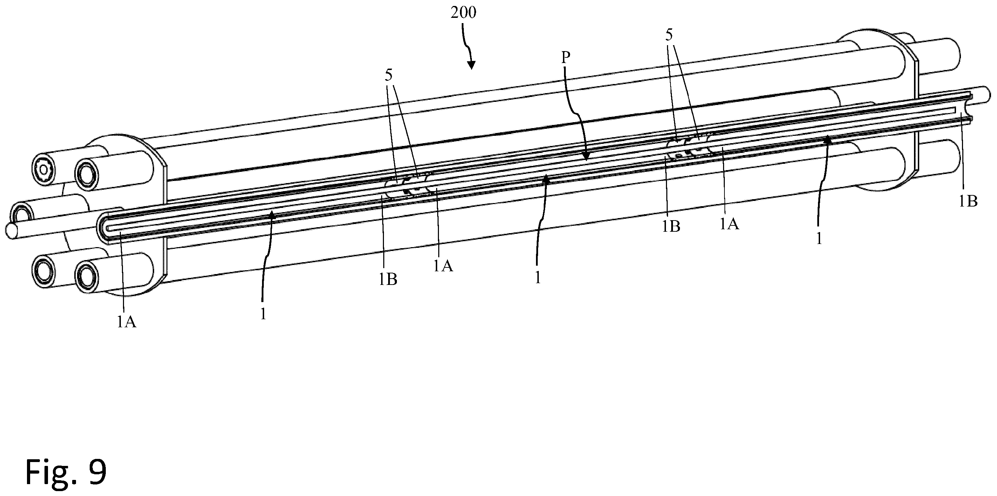

With reference to Figures 8a and 9, it should be specified that the loaders 200 for the multi-spindle machine tools 100 comprise a plurality of loading channels 201 mounted on a rotatable support table 202 configured to maintain each channel associated with the respective spindle (and feed channel) with the rotation of the drum.

It should be specified that the drum and the support table 202 have the same rotation axis and are configured to rotate synchronously around the latter.

It is clear that a person skilled in the art will be able to make numerous equivalent modifications to the variants set forth above, without thereby departing from the scope of protection as defined by the appended claims.

## Claims

1. Anti-vibration device (1) for a machine tool (100) adapted to perform mechanical machining on a workpiece (P) and/or for a loader (200) configured to load the workpiece (P) into the machine tool (100), said anti-vibration device (1) being configured to damp vibrations and oscillations induced on the workpiece (P) during mechanical machining and having a conformation along a prevalent direction of extension (A-A) between a pair of ends (1A, 1B), the anti-vibration device (1) comprising:
- a channel (2) extending along the prevalent direction of extension (A-A) between the pair of ends (1A, 1B), configured to receive and slide the workpiece (P) along the prevalent direction of extension (A-A),
- an outer surface (3), opposite to the channel (2), extending along the prevalent direction of extension (A-A) between the pair of ends (1A, 1B), the outer surface (3) having a polygonal cross-section
- a wall (4) delimited internally by the channel (2) and externally by the outer surface (3),
**characterised in that** the wall (4) is made of an elastomeric material.

2. Anti-vibration device (1) according to claim 1, wherein the wall (4) is made of rubber.

3. Anti-vibration device (1) according to claim 1 wherein the wall (4) is made of polyurethane.

4. Anti-vibration device (1) according to any of the preceding claims, wherein the cross-section of the outer surface (3) defines a regular polygon.

5. Anti-vibration device (1) according to any of the preceding claims, wherein the outer surface (3) has a constant cross-section along the prevalent direction of extension (A-A).

6. Anti-vibration device (1) according to any of the preceding claims, wherein the wall (4) extends in a thickness direction (R-R) between the channel (2) and the outer surface (3), the wall (4) having a thickness comprised between 2 mm and 16 mm calculated along the thickness direction (R-R).

7. Anti-vibration device (1) according to any of the preceding claims, wherein the wall (4) is made by a moulding process.

8. Anti-vibration device (1) according to any of the preceding claims, wherein the polygonal cross-section of the outer surface (3) has rounded edges configured to come into direct contact with a feed channel (103) of the machine tool (100) or with a loading channel (201) of the loader (200).

9. Anti-vibration device (1) according to any of the preceding claims, comprising one or more junction elements (5) arranged at a respective end (1A, 1B), said junction elements (5) being configured to connect in series two or more anti-vibration devices (1) with the respective prevalent direction of extension (A-A) aligned, or to allow the anchoring of the anti-vibration device (1) to the machine tool (100) or to the loader (200).

10. Machine tool (100) configured to perform mechanical machining on a workpiece (P), said machine tool (100) comprising:
- a main body (101);
- a spindle (102) mounted on the main body (101) and configured to clamp the workpiece (P),
- a feed channel (103) extending in the main body (101) along a feed direction (F-F) and placed in communication with the spindle (102), said feed channel (103) being configured to slide the workpiece (P) within itself along the feed direction (F-F) towards the spindle (102),
**characterised in that** it comprises at least one anti-vibration device (1) according to any one of the preceding claims, housed in the feed channel (103) of the machine (100) so as to be interposed between the feed channel (103) and the workpiece (P) when the workpiece (P) is at least partially arranged inside the feed channel (103).

11. Machine tool (100) according to claim 10, wherein:
- the anti-vibration device (1) is arranged in the feed channel (103) with the prevalent direction of extension (A-A) aligned with the feed direction (F-F),
- the outer surface (3) of the anti-vibration device (1) is partially in contact with the feed channel (103) at three or more distinct contact portions (C).

12. Machine tool (100) according to claim 11, wherein:
- the polygonal cross-section of the outer surface (3) has rounded edges,
- said rounded edges being in direct contact with the feed channel (103).

13. Machine tool (100) according to any of claims 10 to 12, wherein the outer surface (3)
of the anti-vibration device (1) defines with the feed channel (103) air chambers (A) extending along the feed direction (F-F) and delimited transversely to the feed direction (F-F) by the contact portions (C).

14. Machine tool (100) according to any of claims 10 to 13, comprising a loader (200) configured to load the workpiece (P) into the feed channel (103), wherein:
- the loader (200) comprises a loading channel (201) extending along a loading direction (M-M) coinciding with the feed direction (F-F) during the loading of the workpiece into the feed channel (103),
- the machine tool (100) comprises a further anti-vibration device (1) housed in the loading channel (201) of the loader (200) so as to be interposed between the loading channel (201) and the workpiece (P) during the loading of the workpiece into the feed channel (103) of the machine tool (100).

## Patentansprüche

1. Antivibrationsvorrichtung (1) für eine Werkzeugmaschine (100), die zur Durchführung einer mechanischen Bearbeitung an einem Werkstück (P) ausgelegt ist, und/oder für einen Lader (200), der zum Laden des Werkstücks (P) in die Werkzeugmaschine (100) konfiguriert ist, wobei die Antivibrationsvorrichtung (1) konfiguriert ist, um während der mechanischen Bearbeitung auf das Werkstück (P) induzierte Vibrationen und Schwingungen zu dämpfen, und eine Ausbildung entlang einer vorherrschenden Erstreckungsrichtung (A-A) zwischen einem Paar von Enden (1A, 1B) aufweist, wobei die Antivibrationsvorrichtung (1) umfasst:
- einen Kanal (2), der sich entlang der vorherrschenden Erstreckungsrichtung (A-A) zwischen dem Paar von Enden (1A, 1B) erstreckt und konfiguriert ist, um das Werkstück (P) entlang der vorherrschenden Erstreckungsrichtung (A-A) aufzunehmen und gleiten zu lassen,
- eine Außenfläche (3), die dem Kanal (2) gegenüberliegt und sich entlang der vorherrschenden Erstreckungsrichtung (A-A) zwischen dem Paar von Enden (1A, 1B) erstreckt, wobei die Außenfläche (3) einen polygonalen Querschnitt aufweist,
- eine Wand (4), die innen durch den Kanal (2) und außen durch die Außenfläche (3) begrenzt ist,
**dadurch gekennzeichnet, dass** die Wand (4) aus einem Elastomermaterial gefertigt ist.

2. Antivibrationsvorrichtung (1) nach Anspruch 1, wobei die Wand (4) aus Gummi gefertigt ist.

3. Antivibrationsvorrichtung (1) nach Anspruch 1, wobei die Wand (4) aus Polyurethan gefertigt ist.

4. Antivibrationsvorrichtung (1) nach einem der vorhergehenden Ansprüche, wobei der Querschnitt der Außenfläche (3) ein regelmäßiges Polygon definiert.

5. Antivibrationsvorrichtung (1) nach einem der vorhergehenden Ansprüche, wobei die Außenfläche (3) einen konstanten Querschnitt entlang der vorherrschenden Erstreckungsrichtung (A-A) aufweist.

6. Antivibrationsvorrichtung (1) nach einem der vorhergehenden Ansprüche, wobei sich die Wand (4) in einer Dickenrichtung (R-R) zwischen dem Kanal (2) und der Außenfläche (3) erstreckt, wobei die Wand (4) eine entlang der Dickenrichtung (R-R) berechnete Dicke zwischen 2 mm und 16 mm aufweist.

7. Antivibrationsvorrichtung (1) nach einem der vorhergehenden Ansprüche, wobei die Wand (4) durch ein Formgebungsverfahren hergestellt wird.

8. Antivibrationsvorrichtung (1) nach einem der vorhergehenden Ansprüche, wobei der polygonale Querschnitt der Außenfläche (3) abgerundete Kanten aufweist, die konfiguriert sind, um in direkten Kontakt mit einem Zuführkanal (103) der Werkzeugmaschine (100) oder mit einem Ladekanal (201) des Laders (200) zu kommen.

9. Antivibrationsvorrichtung (1) nach einem der vorhergehenden Ansprüche, umfassend ein oder mehrere Verbindungselemente (5), die an einem jeweiligen Ende (1A, 1B) angeordnet sind, wobei die Verbindungselemente (5) konfiguriert sind, um zwei oder mehr Antivibrationsvorrichtungen (1) in Reihe zu verbinden, wobei deren jeweilige vorherrschende Erstreckungsrichtung (A-A) ausgerichtet ist, oder um die Verankerung der Antivibrationsvorrichtung (1) an der Werkzeugmaschine (100) oder am Lader (200) zu ermöglichen.

10. Werkzeugmaschine (100), die konfiguriert ist, um eine mechanische Bearbeitung an einem Werkstück (P) durchzuführen, wobei die Werkzeugmaschine (100) umfasst:
- einen Hauptkörper (101);
- eine Spindel (102), die am Hauptkörper (101) montiert und konfiguriert ist, um das Werkstück (P) zu spannen;
- einen Zuführkanal (103), der sich im Hauptkörper (101) entlang einer Zuführrichtung (F-F) erstreckt und mit der Spindel (102) in Verbindung steht, wobei der Zuführkanal (103) konfiguriert ist, um das Werkstück (P) in sich selbst entlang der Zuführrichtung (F-F) in Richtung der Spindel (102) gleiten zu lassen, **dadurch gekennzeichnet, dass** es
sie mindestens eine Antivibrationsvorrichtung (1) nach einem der vorhergehenden Ansprüche umfasst, die in dem Zuführkanal (103) der Werkzeugmaschine (100) so untergebracht ist, dass sie zwischen dem Zuführkanal (103) und dem Werkstück (P) angeordnet ist, wenn das Werkstück (P) zumindest teilweise innerhalb des Zuführkanals (103) angeordnet ist.

11. Werkzeugmaschine (100) nach Anspruch 10, wobei:
- die Antivibrationsvorrichtung (1) in dem Zuführkanal (103) angeordnet ist, wobei die vorherrschende Erstreckungsrichtung (A-A) mit der Zuführrichtung (F-F) ausgerichtet ist,
- die Außenfläche (3) der Antivibrationsvorrichtung (1) an drei oder mehr getrennten Kontaktabschnitten (C) teilweise in Kontakt mit dem Zuführkanal (103) steht.

12. Werkzeugmaschine (100) nach Anspruch 11, wobei:
- der polygonale Querschnitt der Außenfläche (3) abgerundete Kanten aufweist,
- die abgerundeten Kanten in direktem Kontakt mit dem Zuführkanal (103) stehen.

13. Werkzeugmaschine (100) nach einem der Ansprüche 10 bis 12, wobei die Außenfläche (3) der Antivibrationsvorrichtung (1) mit dem Zuführkanal (103) Luftkammern (A) definiert, die sich entlang der Zuführrichtung (F-F) erstrecken und quer zur Zuführrichtung (F-F) durch die Kontaktabschnitte (C) begrenzt sind.

14. Werkzeugmaschine (100) nach einem der Ansprüche 10 bis 13, umfassend einen Lader (200), der konfiguriert ist, um das Werkstück (P) in den Zuführkanal (103) zu laden, wobei:
- der Lader (200) einen Ladekanal (201) umfasst, der sich entlang einer Laderichtung (M-M) erstreckt, die während des Ladens des Werkstücks in den Zuführkanal (103) mit der Zuführrichtung (F-F) zusammenfällt,
- die Werkzeugmaschine (100) eine weitere Antivibrationsvorrichtung (1) umfasst, die in dem Ladekanal (201) des Laders (200) so untergebracht ist, dass sie während des Ladens des Werkstücks in den Zuführkanal (103) der Werkzeugmaschine (100) zwischen dem Ladekanal (201) und dem Werkstück (P) angeordnet ist.

## Revendications

1. Dispositif anti-vibrations (1) pour une machine-outil (100) apte à effectuer un usinage mécanique sur une pièce (P) et/ou pour un chargeur (200) configuré pour charger la pièce (P) dans la machine-outil (100), ledit dispositif anti-vibrations (1) étant configuré pour amortir des vibrations et des oscillations induites sur la pièce (P) pendant l'usinage mécanique et ayant une conformation le long d'une direction d'extension prédominante (A-A) entre une paire d'extrémités (1A, 1B), le dispositif anti-vibrations (1) comprenant :
- un canal (2) s'étendant le long de la direction d'extension prédominante (A-A) entre la paire d'extrémités (1A, 1B), configuré pour recevoir et faire coulisser la pièce (P) le long de la direction d'extension prédominante (A-A),
- une surface extérieure (3), opposée au canal (2), s'étendant le long de la direction d'extension prédominante (A-A) entre la paire d'extrémités (1A, 1B), la surface extérieure (3) ayant une section transversale polygonale,
- une paroi (4) délimitée intérieurement par le canal (2) et extérieurement par la surface extérieure (3),
**caractérisé en ce que** la paroi (4) est faite d'un matériau élastomère.

2. Dispositif anti-vibrations (1) selon la revendication 1, dans lequel la paroi (4) est faite de caoutchouc.

3. Dispositif anti-vibrations (1) selon la revendication 1, dans lequel la paroi (4) est faite de polyuréthane.

4. Dispositif anti-vibrations (1) selon l'une quelconque des revendications précédentes, dans lequel la section transversale de la surface extérieure (3) définit un polygone régulier.

5. Dispositif anti-vibrations (1) selon l'une quelconque des revendications précédentes, dans lequel la surface extérieure (3) a une section transversale constante le long de la direction d'extension prédominante (A-A).

6. Dispositif anti-vibrations (1) selon l'une quelconque des revendications précédentes, dans lequel la paroi (4) s'étend dans une direction d'épaisseur (R-R) entre le canal (2) et la surface extérieure (3), la paroi (4) ayant une épaisseur comprise entre 2 mm et 16 mm calculée le long de la direction d'épaisseur (R-R).

7. Dispositif anti-vibrations (1) selon l'une quelconque des revendications précédentes, dans lequel la paroi (4) est réalisée par un procédé de moulage.

8. Dispositif anti-vibrations (1) selon l'une quelconque des revendications précédentes, dans lequel la section transversale polygonale de la surface extérieure (3) a des bords arrondis configurés pour venir en contact direct avec un canal d'alimentation (103) de la machine-outil (100) ou avec un canal de chargement (201) du chargeur (200).

9. Dispositif anti-vibrations (1) selon l'une quelconque des revendications précédentes, comprenant un ou plusieurs éléments de jonction (5) agencés à une extrémité respective (1A, 1B), lesdits éléments de jonction (5) étant configurés pour connecter en série deux ou plusieurs dispositifs anti-vibrations (1) avec la direction d'extension prédominante (A-A) respective alignée, ou pour permettre l'ancrage du dispositif anti-vibrations (1) à la machine-outil (100) ou au chargeur (200).

10. Machine-outil (100) configurée pour effectuer un usinage mécanique sur une pièce (P), ladite machine-outil (100) comprenant :
- un corps principal (101) ;
- une broche (102) montée sur le corps principal (101) et configurée pour serrer la pièce (P),
- un canal d'alimentation (103) s'étendant dans le corps principal (101) le long d'une direction d'alimentation (F-F) et placé en communication avec la broche (102), ledit canal d'alimentation (103) étant configuré pour faire coulisser la pièce (P) à l'intérieur de celui-ci le long de la direction d'alimentation (F-F) vers la broche (102), **caractérisée en ce qu'**elle comprend au moins un dispositif anti-vibrations (1) selon l'une quelconque des revendications précédentes, logé dans le canal d'alimentation (103) de la machine-outil (100) de manière à être interposé entre le canal d'alimentation (103) et la pièce (P) lorsque la pièce (P) est au moins partiellement agencée à l'intérieur du canal d'alimentation (103).

11. Machine-outil (100) selon la revendication 10, dans laquelle :
- le dispositif anti-vibrations (1) est agencé dans le canal d'alimentation (103) avec la direction d'extension prédominante (A-A) alignée avec la direction d'alimentation (F-F),
- la surface extérieure (3) du dispositif anti-vibrations (1) est partiellement en contact avec le canal d'alimentation (103) au niveau de trois ou plus portions de contact distinctes (C).

12. Machine-outil (100) selon la revendication 11, dans laquelle :
- la section transversale polygonale de la surface extérieure (3) a des bords arrondis,
- lesdits bords arrondis étant en contact direct avec le canal d'alimentation (103).

13. Machine-outil (100) selon l'une quelconque des revendications 10 à 12, dans laquelle la surface extérieure (3) du dispositif anti-vibrations (1) définit avec le canal d'alimentation (103) des chambres à air (A) s'étendant le long de la direction d'alimentation (F-F) et délimitées transversalement à la direction d'alimentation (F-F) par les portions de contact (C).

14. Machine-outil (100) selon l'une quelconque des revendications 10 à 13, comprenant un chargeur (200) configuré pour charger la pièce (P) dans le canal d'alimentation (103), dans laquelle :
- le chargeur (200) comprend un canal de chargement (201) s'étendant le long d'une direction de chargement (M-M) coïncidant avec la direction d'alimentation (F-F) pendant le chargement de la pièce dans le canal d'alimentation (103),
- la machine-outil (100) comprend un dispositif anti-vibrations supplémentaire (1) logé dans le canal de chargement (201) du chargeur (200) de manière à être interposé entre le canal de chargement (201) et la pièce (P) pendant le chargement de la pièce dans le canal d'alimentation (103) de la machine-outil (100).
